# EUROPEAN PATENT APPLICATION

(11) **EP 4 044 043 A1**
(43) Date of publication of application: **17.08.2022**
(21) Application number: 20878988.3
(22) Date of filing: 22.10.2020
(51) Int. Cl.: G06F 16/242

(54) **STORAGE PROCESS RUNNING METHOD AND APPARATUS, DATABASE SYSTEM, AND STORAGE MEDIUM**

(30) Priority: 25.10.2019 CN 201911025993
(71) Applicant: ZTE Corporation, Shenzhen, Guangdong 518057 (CN)
(72) Inventor: LI, Jinhu, Shenzhen, Guangdong 518057 (CN); LU, Ping, Shenzhen, Guangdong 518057 (CN)
(74) Representative: Canzler & Bergmeier Patentanwälte Partnerschaft mbB
(86) International application number: PCT/CN2020/122640
(87) International publication number: WO 2021/078176

(57) **Abstract**

A storage process running method and apparatus, and a database system, and a storage medium. The method comprises: a structured query language (SQL) processing engine sends a storage process execution request message to a storage process engine (S110); the SQL processing engine executes, for multiple times, SQL execution request messages sent by the storage process engine (S120); the SQL processing engine receives a storage process execution response message sent by the storage process engine (S130).

## Description

### CROSS-REFERENCE TO RELATED APPLICATIONS

The present disclosure claims the priority to the Chinese Patent Application No. 201911025993.7 filed with the CNIPA on October 25, 2019, the entire contents of which are incorporated herein by reference.

### TECHNICAL FIELD

The present disclosure relates to the field of databases, for example, relates to a running method and device for a stored procedure, a database system and a storage medium.

### BACKGROUND

A Stored Procedure is a set of Structured Query Language (SQL) statements stored in a database system for performing a specific function, and the set of SOL statements include SQL statements and flow control statements. In a distributed database, different engines need to be accessed for execution of stored procedures and execution of SQL, which imposes limitations on an application, that is, the execution of SQL and the execution of stored procedures in the application need to access different components in the distributed database. In addition, in some distributed databases, since an SQL processing engine is tightly coupled with the execution of stored procedures, a failure of all functions is caused if one of the SQL processing engine and a stored procedure engine fails. In many online service scenarios, it should be ensured that the SQL processing engine has such high reliability and availability that the SOL processing engine will not be made unstable in the presence of a distributed stored procedure function.

### SUMMARY

The present disclosure provides a running method and device for a stored procedure, a database system and a storage medium, which can ensure the stability of an SQL processing engine while achieving execution of a distributed stored procedure in a distributed database.

There is provided a running method for a stored procedure, including: sending, by an SQL processing engine, a stored procedure execution request message to a stored procedure engine; executing, by the SQL processing engine, a plurality of SQL execution request messages sent by the stored procedure engine for a plurality of times, with each time of the execution corresponding to a respective one of the plurality of SQL execution request messages; and receiving, by the SQL processing engine, a stored procedure execution response message sent by the stored procedure engine.

An embodiment of the present disclosure further provides a running method for a stored procedure, including: receiving, by a stored procedure engine, a stored procedure execution request message sent by an SQL processing engine; constructing and sending, by the stored procedure engine, a plurality of SQL execution request messages to the SQL processing engine for a plurality of times, with each time of the construction and sending corresponding to a respective one of the plurality of SQL execution request messages; and sending, by the stored procedure engine, a stored procedure execution response message to the SQL processing engine.

There is also provided an SQL processing engine, including: a processor configured to perform the above method applicable to the side of the SQL processing engine when executing a computer program.

There is also provided a stored procedure engine, including: a processor configured to perform the above method applicable to the side of the stored procedure engine when executing a computer program.

There is also provided a database system, including: the stored procedure engine and the SQL processing engine.

There is also provided a computer-readable storage medium having a computer program stored thereon which, when being executed, implements any one of the running methods for a stored procedure.

The above embodiments and the other aspects of the present disclosure, and the implementations thereof are further illustrated in the Brief Description of Drawings, the Detail Description of Embodiments and the Claims.

### BRIEF DESCRIPTION OF DRAWINGS

FIG. 1 is a schematic structural diagram of a database system according to an embodiment;
FIG. 2 is a flowchart illustrating a running method for a stored procedure according to an embodiment;
FIG. 3 is a flowchart illustrating another running method for a stored procedure according to an embodiment;
FIG. 4 is a schematic diagram illustrating interaction in a running method for a stored procedure according to an embodiment;
FIG. 5 is a schematic diagram illustrating interaction in another running method for a stored procedure according to an embodiment;
FIG. 6 is a schematic diagram illustrating interaction in still another running method for a stored procedure according to an embodiment;
FIG. 7 is a schematic structural diagram of a running device for a stored procedure according to an embodiment;
FIG. 8 is a schematic structural diagram of another running device for a stored procedure according to an embodiment;
FIG. 9 is a schematic structural diagram of an SQL processing engine according to an embodiment; and
FIG. 10 is a schematic structural diagram of a stored procedure engine according to an embodiment.

### DETAIL DESCRIPTION OF EMBODIMENTS

The embodiments of the present disclosure will be described below with reference to the accompanying drawings.

A stored procedure is a set of SQL statements stored in a database system for performing a specific function, and may include SQL statements (an SQL statement is generally an expression which may include at least one sub-expression) and flow control statements (a flow control statement may constitute a flow control statement block which may include a plurality of SQL statements).

In a conventional relational database, one data storage node alone is provided, and stored procedures are stored on such node. When the SQL and the stored procedures are executed, operations such as access and modification are all performed on the data stored in the storage node. In the distributed database, a plurality of data storage nodes are provided, and the execution of a stored procedure needs coordination of all the data storage nodes, rather than being independently carried out on each of the data storage nodes. In the distributed database, different engines need to be accessed for the execution of stored procedures and the execution of SQL (for example, a Procedural Language (PL) engine needs to be accessed for the execution of stored procedures, and an SQL processing engine needs to be accessed for the execution of SQL), which imposes limitations on an application, that is, the execution of SQL and the execution of stored procedures in the application need to access different components in the distributed database. In addition, in some distributed databases, since the SQL processing engine is tightly coupled with the execution of stored procedures, a failure of all functions is caused if one of the SQL processing engine and the stored procedure engine fails. In many online service scenarios, it should be ensured that the SQL processing engine has such high reliability and availability that the SOL processing engine will not be made unstable in the presence of a distributed stored procedure function.

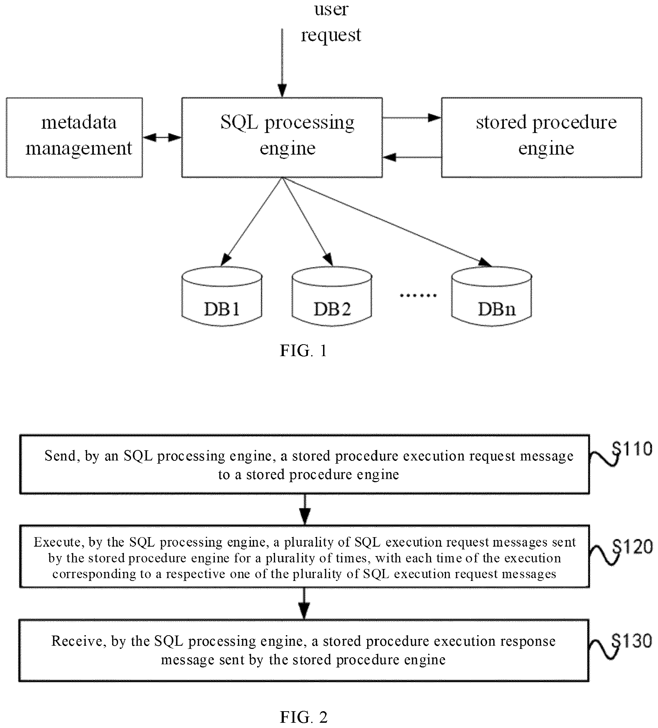

FIG. 1 is a schematic structural diagram of a database system according to an embodiment. As shown in FIG. 1, the database system includes a stored procedure engine and an SQL processing engine. The stored procedure engine is configured to run a stored procedure, has a function of controlling a process of the stored procedure, and belongs to a stored procedure execution engine module of the distributed database; and the SQL processing engine is configured to execute SQL statements in the stored procedure, has the capability to execute the SQL, and belongs to an SQL execution module of the distributed database. The SQL processing engine provides an access point for a user, receives a user request, and enables a single access point manner (that is, without being customized, an application program accesses the access point to execute SQL and a stored procedure of the user request). The SQL processing engine is further connected to n data storage nodes (e.g., Databases (DBs)). An embodiment of the present disclosure provides a running method for a stored procedure, which is applicable to the above database system, and the running method may run distributed stored procedures in the distributed database, and also ensure stability of the SQL processing engine.

The terms "system" and "network" are often interchanged in the present disclosure. Each of the following embodiments of the present disclosure may be implemented independently, or a plurality of the embodiments may be combined and implemented together. Specific implementation of the embodiments is not limited in the present disclosure.

A running method and device for a stored procedure, a database system, and the technical effects thereof are described below.

FIG. 2 is a flowchart illustrating a running method for a stored procedure according to an embodiment. As shown in FIG. 2, the method provided in the embodiment is applicable to an SQL processing engine, and includes operations S110 to S130.

At the operation S110, an SQL processing engine sends a stored procedure execution request message to a stored procedure engine.

In an embodiment, before the operation S110 is performed, the SQL processing engine receives a request message input by a user. The request message input by the user may include at least one of an SQL execution request message or a stored procedure execution request message. If the request message input by the user is an SQL execution request message, the SQL processing engine executes the SQL execution request message directly; and if the request message input by the user is a stored procedure execution request message, the SQL processing engine then performs the operation S110.

The SQL processing engine may identify whether the request message input by the user is the SQL execution request message or the stored procedure execution request message by parsing the request message input by the user.

At the operation S120, the SQL processing engine executes a plurality of SQL execution request messages sent by the stored procedure engine for a plurality of times, with each time of the execution corresponding to a respective one of the plurality of SQL execution request message.

In an embodiment, the operation S120 may include the following operations:
1a): receiving, by the SQL processing engine, an SQL execution request message sent by the stored procedure engine;
1b): executing the SQL execution request message by the SQL processing engine;
1c): sending an SQL execution response message by the SQL processing engine to the stored procedure engine;
1d): receiving, by the SQL processing engine, an SQL result set request message sent by the stored procedure engine;
1e): sending, by the SQL processing engine, an SQL result set response message to the stored procedure engine according to the SQL result set request message, with the SQL result set response message carrying an SQL execution result;
1f): receiving, by the SQL processing engine, an SQL result release indication message sent by the stored procedure engine; and
1g): releasing an SQL result set by the SQL processing engine according to the SQL result release indication message.

The SQL processing engine returns to perform the operation 1a) again until the stored procedure engine stops sending any SQL execution request message.

In an embodiment, if the SQL processing engine makes an error while executing the SQL execution request message sent by the stored procedure engine, the SQL processing engine sends an error message to the stored procedure engine.

At the operation S130, the SQL processing engine receives a stored procedure execution response message sent by the stored procedure engine.

In an embodiment, after the SQL processing engine receives the stored procedure execution response message sent by the stored procedure engine, the SQL processing engine feeds a final execution result of the stored procedure back to the user.

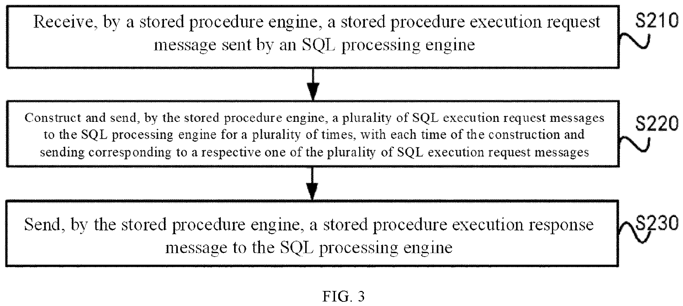

FIG. 3 is a flowchart illustrating another running method for a stored procedure according to an embodiment. As shown in FIG. 3, the method provided in the embodiment is applicable to a stored procedure engine, and includes operations S210 to S230.

At the operation S210, a stored procedure engine receives a stored procedure execution request message sent by an SQL processing engine.

At the operation S220, the stored procedure engine constructs and sends a plurality of SQL execution request messages to the SQL processing engine for a plurality of times, with each time of the construction and sending corresponding to a respective one of the plurality of SQL execution request messages.

In an embodiment, the operation S220 may include the following operations:
2a): constructing, by the stored procedure engine, an SQL execution request message according to the stored procedure execution request message;
2b): sending the SQL execution request message by the stored procedure engine to the SQL processing engine;
2c): receiving, by the stored procedure engine, an SQL execution response message sent by the SQL processing engine;
2d): sending an SQL result set request message by the stored procedure engine to the SQL processing engine;
2e): receiving, by the stored procedure engine, an SQL result set response message sent by the SQL processing engine, with the SQL result set response message carrying an SQL execution result; and
2f): sending an SQL result release indication message by the stored procedure engine to the SQL processing engine.

The stored procedure engine returns to perform the operation 2a) again until the stored procedure engine stops constructing any SQL execution request message.

At the operation S230, the stored procedure engine sends a stored procedure execution response message to the SQL processing engine.

In an embodiment, if the stored procedure engine makes an error while executing the stored procedure, the stored procedure engine writes the error information in the stored procedure execution response message.

Several interactive implementations are listed below for illustrating the running methods for a storage procedure shown in FIG. 2 and FIG. 3.

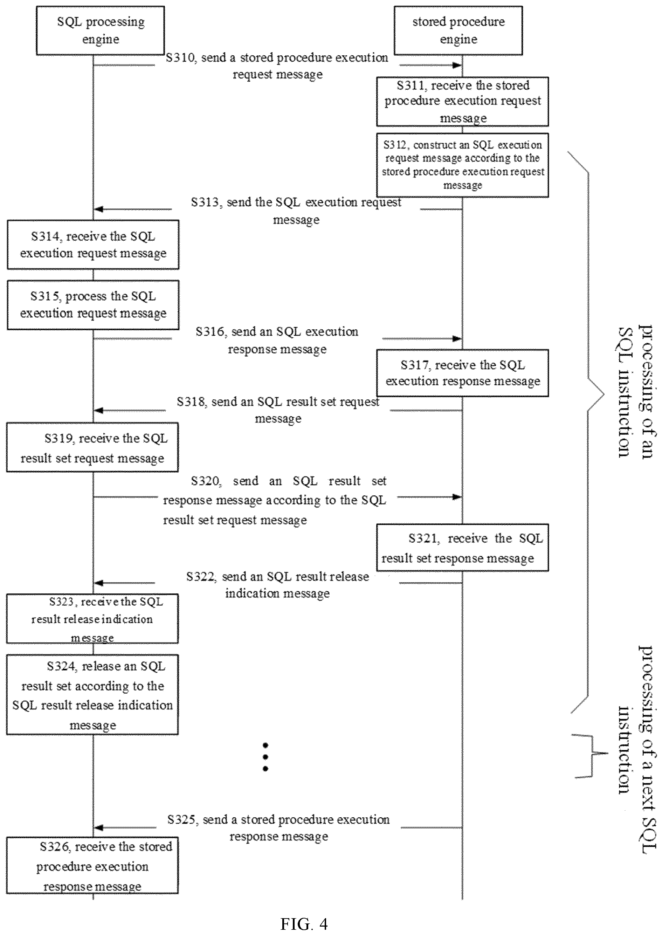

FIG. 4 is a schematic diagram illustrating interaction in a running method for a stored procedure according to an embodiment. As shown in FIG. 4, the method includes the following operations S310 to S317.

At the operation S310, an SQL processing engine sends a stored procedure execution request message to a stored procedure engine.

In an embodiment, before the operation S310 is performed, the SQL processing engine receives a request message input by a user. The request message input by the user may include at least one of an SQL execution request message or a stored procedure execution request message. If the request message input by the user is an SQL execution request message, the SQL processing engine executes the SQL execution request message directly; and if the request message input by the user is a stored procedure execution request message, the SQL processing engine then performs the operation S310.

The SQL processing engine may identify whether the request message input by the user is the SQL execution request message or the stored procedure execution request message by parsing the request message input by the user.

In an embodiment, the stored procedure execution request message includes a CALL statement and parameter information which includes at least one of output-parameter information, input-parameter information, or output/input-parameter information.

At the operation S311, the stored procedure engine receives the stored procedure execution request message sent by the SQL processing engine.

At the operation S312, the stored procedure engine constructs an SQL execution request message according to the stored procedure execution request message.

After receiving the stored procedure execution request message, the stored procedure engine calls an internal processing procedure to execute the stored procedure requested to be executed by the stored procedure execution request message. When an SQL instruction is encountered during the execution of the stored procedure, the stored procedure engine may construct a complete SQL statement (i.e., the SQL execution request message) based on the SQL instruction, then send the SQL execution request message to the SQL processing engine for execution, and wait for the SQL processing engine to return an SQL execution response message.

At the operation S313, the stored procedure engine sends the SQL execution request message to the SQL processing engine.

At the operation S314, the SQL processing engine receives the SQL execution request message sent by the stored procedure engine.

At the operation S315, the SQL processing engine processes the SQL execution request message.

At the operation S316, the SQL processing engine sends an SQL execution response message to the stored procedure engine.

At the operation S317, the stored procedure engine receives the SQL execution response message sent by the SQL processing engine.

After receiving the SQL execution response message returned by the SQL processing engine, the stored procedure engine continues to execute the stored procedure from the waiting point until the next SQL instruction is encountered. When the next SQL instruction is encountered, the stored procedure engine returns to perform the operations S312-S317 until the execution of the stored procedure is completed.

In an embodiment, when the stored procedure engine needs an SQL execution result, the method may further include the following operations S318 to S324.

At the operation S318, the stored procedure engine sends an SQL result set request message to the SQL processing engine.

At the operation S319, the SQL processing engine receives the SQL result set request message sent by the stored procedure engine.

At the operation S320, the SQL processing engine sends an SQL result set response message to the stored procedure engine according to the SQL result set request message, with the SQL result set response message carrying an SQL execution result.

At the operation S321, the stored procedure engine receives the SQL result set response message sent by the SQL processing engine.

At the operation S322, the stored procedure engine sends an SQL result release indication message to the SQL processing engine.

At the operation S323, the SQL processing engine receives the SQL result release indication message sent by the stored procedure engine.

At the operation S324, the SQL processing engine releases an SQL result set according to the SQL result release indication message.

At the operation S325, the stored procedure engine sends a stored procedure execution response message to the SQL processing engine.

After the stored procedure engine completes the execution of the whole stored procedure, the stored procedure engine sends the stored procedure execution response message to the SQL processing engine. The stored procedure execution response message includes output-parameter information.

At the operation S326, the SQL processing engine receives the stored procedure execution response message sent by the stored procedure engine.

In an embodiment, after the SQL processing engine receives the stored procedure execution response message sent by the stored procedure engine, the SQL processing engine feeds a final execution result of the stored procedure back to the user.

In this way, the stored procedure engine and the SQL processing engine can be decoupled from each other in the distributed stored procedure. Each SQL statement dynamically generated by the stored procedure engine is executed by the SQL processing engine, so as to realize distributed execution of the whole stored procedure.

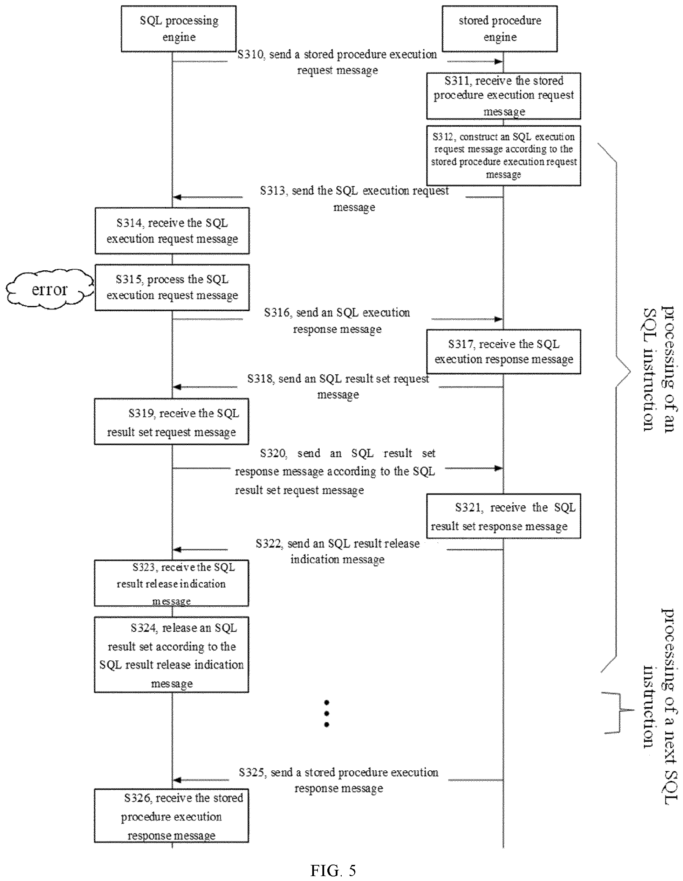

FIG. 5 is a schematic diagram illustrating interaction in another running method for a stored procedure according to an embodiment. Unlike the running method for a stored procedure shown in FIG. 4, an SQL processing engine shown in FIG. 5 makes an error while executing an SQL execution request message, and the SQL processing engine may send an error message to a stored procedure engine instead of directly giving an error prompt to a user. Whether the execution of a stored procedure can be continued needs to be determined by a processing procedure in the stored procedure engine, because definitions for error handling may be provided in the definition of the stored procedure.

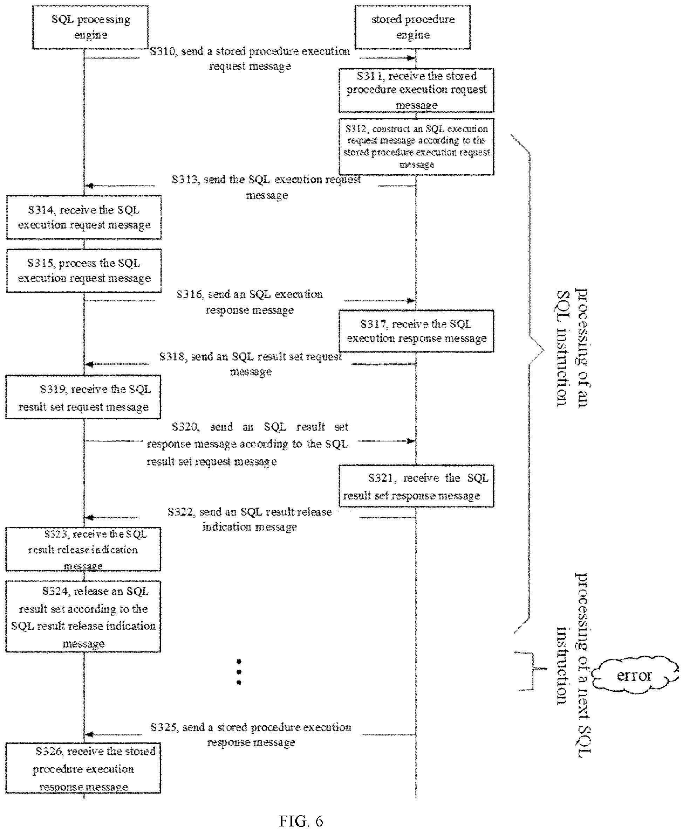

FIG. 6 is a schematic diagram illustrating interaction in still another running method for a stored procedure according to an embodiment. Unlike the running method for a stored procedure shown in FIG. 4, a stored procedure engine shown in FIG. 6 makes an error while executing a stored procedure, and the stored procedure engine may write the error information in a stored procedure execution response message.

Thus, the SQL processing engine and the stored procedure engine can be isolated from each other, so that a failure of one of the SQL processing engine and the stored procedure engine does not lead to a failure of the other, or affect processing of other services of the user by the SQL processing engine, which ensures the stability of the SQL processing engine.

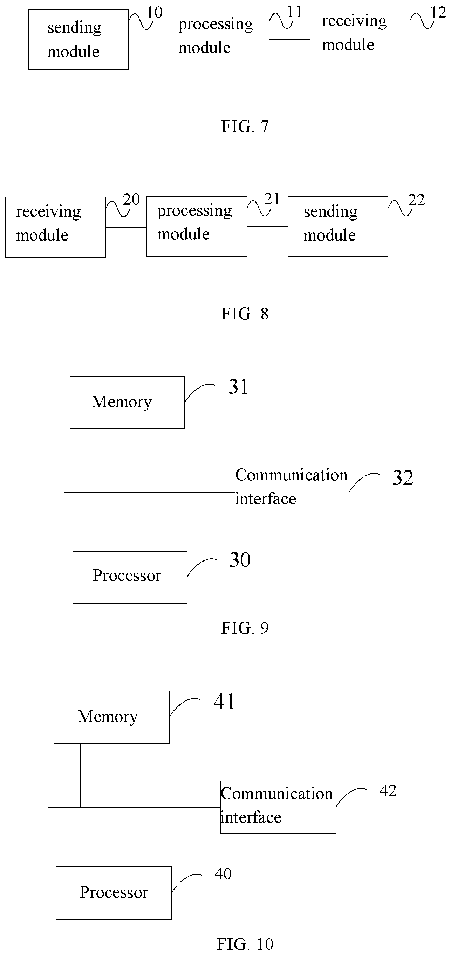

FIG. 7 is a schematic structural diagram of a running device for a stored procedure according to an embodiment, and the running device for a stored procedure may be provided in an SQL processing engine. As shown in FIG. 7, the running device includes a sending module 10, a processing module 11 and a receiving module 12.

The sending module 10 is configured to send a stored procedure execution request message to a stored procedure engine.

The processing module 11 is configured to execute a plurality of SQL execution request messages sent by the stored procedure engine for a plurality of times, with each time of the execution corresponding to a respective one of the plurality of SQL execution request messages.

The receiving module 12 is configured to receive a stored procedure execution response message sent by the stored procedure engine.

The running device for a stored procedure provided in the embodiment is configured to implement the running method for a stored procedure described in the above embodiments, and an implementation principle and a technical effect of the running device for a stored procedure provided in the embodiment are similar to those of the above running method for a stored procedure, and thus are not described here.

In an embodiment, until the stored procedure engine stops sending any SQL execution request message, the receiving module 12 is further configured to receive an SQL execution request message sent by the stored procedure engine; the processing module 11 is further configured to process the SQL execution request message received by the receiving module 12; and the sending module 10 is further configured to send an SQL execution response message to the stored procedure engine.

In an embodiment, the receiving module 12 is further configured to receive an SQL result set request message sent by the stored procedure engine; and the sending module 10 is further configured to send an SQL result set response message to the stored procedure engine according to the SQL result set request message, with the SQL result set response message carrying an SQL execution result.

In an embodiment, the receiving module 12 is further configured to receive an SQL result release indication message sent by the stored procedure engine; and the processing module 11 is further configured to release an SQL result set according to the SQL result release indication message.

In an embodiment, the sending module 10 is further configured to send an error message to the stored procedure engine when the processing module 11 makes an error while executing the SQL execution request message sent by the stored procedure engine.

In an embodiment, the receiving module 12 is further configured to acquire the stored procedure execution request message before the sending module 10 sends the stored procedure execution request message to the stored procedure engine.

FIG. 8 is a schematic structural diagram of another running device for a stored procedure according to an embodiment, and the running device for a stored procedure may be provided in a stored procedure engine. As shown in FIG. 8, the running device includes a receiving module 20, a processing module 21 and a sending module 22.

The receiving module 20 is configured to receive a stored procedure execution request message sent by an SQL processing engine.

The processing module 21 is configured to construct an SQL execution request message for a plurality of times.

The sending module 22 is configured to send the SQL execution request messages to the SQL processing engine, and is further configured to send a stored procedure execution response message to the SQL processing engine.

The running device for a stored procedure provided in the embodiment is configured to implement the running method for a stored procedure described in the above embodiments, and an implementation principle and a technical effect of the running device for a stored procedure provided in the embodiment are similar to those of the above running method for a stored procedure, and thus are not described here.

In an embodiment, until the processing module 21 stops constructing any SQL execution request message, the processing module 21 is configured to construct an SQL execution request message according to the stored procedure execution request message; the sending module 22 is configured to send the SQL execution request message constructed by the processing module 21 to the SQL processing engine; and the receiving module 20 is further configured to receive an SQL execution response message sent by the SQL processing engine.

In an embodiment, the sending module 22 is further configured to send an SQL result set request message to the SQL processing engine; and the receiving module 20 is further configured to receive an SQL result set response message sent by the SQL processing engine, with the SQL result set response message carrying an SQL execution result.

In an embodiment, the sending module 22 is further configured to send an SQL result release indication message to the SQL processing engine.

In an embodiment, the processing module 21 is further configured to write error information in the stored procedure execution response message in a case where the processing module 21 makes an error while executing the stored procedure.

An embodiment of the present disclosure provides an SQL processing engine, including: a processor configured to perform the method described in any one of the above embodiments when executing a computer program. FIG. 9 is a schematic structural diagram of an SQL processing engine according to an embodiment. As shown in FIG. 9, the SQL processing engine includes a processor 30, a memory 31 and a communication interface 32; one or more processors 30 may be provided in the SQL processing engine, and a case where one processor 30 is provided is taken as an example in FIG. 9; and the processor 30, the memory 31 and the communication interface 32 in the SQL processing engine may be connected through a bus or by other means, and a case where the connection is achieved through a bus is taken as an example in FIG. 9. The bus represents one or more of several types of bus structures, and includes a memory bus or a memory controller, a peripheral bus, an accelerated graphics port, and a processor or a local bus in any of a plurality of bus structures.

As a computer-readable storage medium, the memory 31 may be configured to store software programs, computer-executable programs and modules, such as program instructions/modules corresponding to the methods described in the embodiments of the present disclosure. The processor 30 executes at least one of functional applications of the SQL processing engine and data processing by executing the software programs, instructions and modules stored in the memory 31, that is, implementing the above running methods for a stored procedure.

The memory 31 may include a program storage region and a data storage region, with the program storage region allowing for storage of an operating system and an application program for at least one function, and the storage data region allowing for storage of data created according to the use of the SQL processing engine. The memory 31 may include a high-speed random access memory, and may further include a non-volatile memory, such as at least one magnetic disk storage device, a flash memory, or other non-volatile solid-state memory. In some examples, the memory 31 may include a memory remotely arranged relative to the processor 30, and the remote memory may be connected to the SQL processing engine via a network. The examples of the above network include, but are not limited to, the Internet, an intranet, a local area network, a mobile communication network, and the combinations thereof.

The communication interface 32 may be configured to transmit and receive data.

An embodiment of the present disclosure provides a stored procedure engine, including: a processor configured to perform the method described in any one of the above embodiments when executing a computer program. FIG. 10 is a schematic structural diagram of a stored procedure engine according to an embodiment. As shown in FIG. 10, the stored procedure engine includes a processor 40, a memory 41 and a communication interface 42; one or more processors 40 may be provided in the stored procedure engine, and a case where one processor 40 is provided is taken as an example in FIG. 10; and the processor 40, the memory 41 and the communication interface 42 in the stored procedure engine may be connected through a bus or by other means, and a case where the connection is achieved through a bus is taken as an example in FIG. 10. The bus represents one or more of several types of bus structures, and includes a memory bus or a memory controller, a peripheral bus, an accelerated graphics port, and a processor or a local bus in any of a plurality of bus structures.

As a computer-readable storage medium, the memory 41 may be configured to store software programs, computer-executable programs and modules, such as program instructions/modules corresponding to the methods described in the embodiments of the present disclosure. The processor 40 executes at least one of functional applications of the stored procedure engine and data processing by executing the software programs, instructions and modules stored in the memory 41, that is, implementing the above running methods for a stored procedure.

The memory 41 may include a program storage region and a data storage region, with the program storage region allowing for storage of an operating system and an application program for at least one function, and the storage data region allowing for storage of data created according to the use of the stored procedure engine. The memory 41 may include a high-speed random access memory, and may further include a non-volatile memory, such as at least one magnetic disk storage device, a flash memory, or other non-volatile solid-state memory. In some examples, the memory 41 may include a memory remotely arranged relative to the processor 40, and the remote memory may be connected to the stored procedure engine via a network. The examples of the above network include, but are not limited to, the Internet, an intranet, a local area network, a mobile communication network, and the combinations thereof.

The communication interface 42 may be configured to transmit and receive data.

An embodiment of the present disclosure further provides a computer-readable storage medium having a computer program stored thereon. When the computer program is executed by a processor, the method provided in any embodiment of the present disclosure is implemented.

The computer storage medium provided in the embodiment of the present disclosure may be one computer-readable medium or any combination of a plurality of computer-readable media. The computer-readable medium may be a computer-readable signal medium or a computer-readable storage medium. The computer-readable storage medium may be, but is not limited to, for example, an electronic system, apparatus or device, a magnetic system, apparatus or device, an optical system, apparatus or device, an electromagnetic system, apparatus or device, an infrared system, apparatus or device, a semiconductor system, apparatus or device, or any combination thereof. The computer-readable storage medium includes (a non-exhaustive list): an electrical connector having one or more wires, a portable computer disk, a hard disk, a Random Access Memory (RAM), a Read-Only Memory (ROM), an Electrically Erasable Programmable Read-Only Memory (EEPROM), a flash memory, an optical fiber, a portable Compact Disc Read-Only Memory (CD-ROM), an optical storage device, a magnetic storage device, or any suitable combination thereof. In the present disclosure, the computer-readable storage medium may be any tangible medium that contains or stores a program capable of being used by or together with an instruction execution system, apparatus or device.

The computer-readable signal medium may include a data signal which is propagated at a baseband or propagated as a part of a carrier, and the data signal carries computer-readable program codes. The data signal such propagated may take a plurality of forms, and includes, but is not limited to, an electromagnetic signal, an optical signal, or any suitable combination thereof. The computer-readable signal medium may be any computer-readable medium except for the computer-readable storage medium, and the computer-readable storage medium is capable of sending, propagating, or transferring a program configured to be used by or together with an instruction execution system, apparatus or device.

The program codes carried on the computer-readable medium may be transferred with any proper medium that includes, but is not limited to, a wireless medium, a wire, an optical fiber, a Radio Frequency (RF) medium, or any suitable combination thereof.

The computer program codes for performing the operations described in the present disclosure may be written in one or more programming languages, or in a combination of a plurality of programming languages, and the programming languages include object-oriented programming languages such as Java, Smalltalk, C++, Ruby and Go, and also include conventional procedural programming languages, such as C or similar programming languages. The program codes may be executed on a user's computer totally or partially, or executed as a stand-alone software package, or executed partially on the user's computer and partially on a remote computer, or executed totally on the remote computer or a remote server. In a case where the remote computer is involved, the remote computer may be connected to the user's computer through any type of networks, including a Local Area Network (LAN) or a Wide Area Network (WAN), or may be connected to an external computer (for example, through the Internet via an Internet service provider).

The various embodiments of the present disclosure may be implemented by hardware or special circuits, software, logic or any combination thereof. For example, some aspects of the present disclosure may be implemented by hardware and other aspects may be implemented by firmware or software executable by a controller, a microprocessor or other computing device, but the present disclosure is not limited thereto.

The embodiments of the present disclosure may be implemented by a data processor of a mobile device executing computer program instructions. For example, the embodiments of the present disclosure are implemented in a processor entity, or by hardware, or by a combination of software and hardware. The computer program instructions may be assembly instructions, Instruction Set Architecture (ISA) instructions, machine instructions, machine-related instructions, microcode, firmware instructions, state setting data, or source code or object code written in one programming language or in any combination of a plurality of programming languages.

A block diagram illustrating any logic flow in the drawings of the present disclosure may show operations of a program, or interconnected logic circuits, modules and functions, or a combination of the operations of the program and the logic circuits, modules and functions. The computer program can be stored on the memory. The memory may be in any type suitable to local technical environment and may be implemented using any suitable data storage technology. For example, the memory is, but not limited to, an ROM, an RAM, and an optical storage device and system (a Digital Video Disc (DVD) or a Compact Disc (CD)). The computer-readable medium may include a non-transitory storage medium. The data processor may be in any type suitable to the local technical environment. For example, the data processor is, but not limited to, a general-purpose computer, a special purpose computer, a microprocessor, a Digital Signal Processors (DSP), an Application Specific Integrated Circuit (ASIC), a Field Programmable Gate Array (FGPA) and a processor based on multi-core architecture.

## Claims

1. A running method for a stored procedure, comprising:
sending, by a Structured Query Language, SQL, processing engine, a stored procedure execution request message to a stored procedure engine;
executing, by the SQL processing engine, a plurality of SQL execution request messages sent by the stored procedure engine for a plurality of times, wherein each time of the execution is corresponding to a respective one of the plurality of SQL execution request messages; and
receiving, by the SQL processing engine, a stored procedure execution response message sent by the stored procedure engine.

2. The method of claim 1, wherein each time of the execution, by the SQL processing engine, of the SQL execution request message sent by the stored procedure engine comprises:
receiving, by the SQL processing engine, the SQL execution request message sent by the stored procedure engine;
processing, by the SQL processing engine, the SQL execution request message sent by the stored procedure engine; and
sending, by the SQL processing engine, an SQL execution response message to the stored procedure engine.

3. The method of claim 2, before the SQL processing engine returns to receive a next SQL execution request message sent by the stored procedure engine, further comprising:
receiving, by the SQL processing engine, an SQL result set request message sent by the stored procedure engine; and
sending, by the SQL processing engine, an SQL result set response message to the stored procedure engine according to the SQL result set request message, wherein the SQL result set response message carries an SQL execution result.

4. The method of claim 3, after the SQL processing engine sends the SQL result set response message to the stored procedure engine according to the SQL result set request message, further comprising:
receiving, by the SQL processing engine, an SQL result release indication message sent by the stored procedure engine; and
releasing, by the SQL processing engine, an SQL result set according to the SQL result release indication message.

5. The method of claim 1, further comprising:
in a case where the SQL processing engine makes an error while executing the SQL execution request message sent by the stored procedure engine, sending, by the SQL processing engine, an error message to the stored procedure engine.

6. The method of claim 1, before the SQL processing engine sends the stored procedure execution request message to the stored procedure engine, further comprising:
acquiring the stored procedure execution request message by the SQL processing engine.

7. A running method for a stored procedure, comprising:
receiving, by a stored procedure engine, a stored procedure execution request message sent by an SQL processing engine;
constructing and sending, by the stored procedure engine, a plurality of SQL execution request messages to the SQL processing engine for a plurality of times, wherein each time of the construction and sending is corresponding to a respective one of the plurality of SQL execution request messages; and
sending, by the stored procedure engine, a stored procedure execution response message to the SQL processing engine.

8. The method of claim 7, wherein each time of the construction and sending, by the stored procedure engine, of the SQL execution request message to the SQL processing engine, comprising:
constructing, by the stored procedure engine, the SQL execution request message according to the stored procedure execution request message;
sending, by the stored procedure engine, the SQL execution request message constructed by the stored procedure engine to the SQL processing engine; and
receiving, by the stored procedure engine, an SQL execution response message sent by the SQL processing engine.

9. The method of claim 8, before the stored procedure engine returns to construct a next SQL execution request message according to the stored procedure execution request message, further comprising:
sending, by the stored procedure engine, an SQL result set request message to the SQL processing engine; and
receiving, by the stored procedure engine, an SQL result set response message sent by the SQL processing engine, wherein the SQL result set response message carries an SQL execution result.

10. The method of claim 9, after the stored procedure engine receives the SQL result set response message sent by the SQL processing engine, further comprising:
sending, by the stored procedure engine, an SQL result release indication message to the SQL processing engine.

11. The method of claim 7, further comprising:
in a case where the stored procedure engine makes an error while executing a stored procedure, writing, by the stored procedure engine, error information in the stored procedure execution response message.

12. An SQL processing engine, comprising: a processor configured to perform the running method for a stored procedure of any one of claims 1 to 6 when executing a computer program.

13. A stored procedure engine, comprising: a processor configured to perform the running method for a stored procedure of any one of claims 7 to 11 when executing a computer program.

14. A database system, comprising: the stored procedure engine of claim 13 and the SQL processing engine of claim 12.

15. A computer-readable storage medium having a computer program stored thereon which, when being executed by a processor, implements the running method for a stored procedure of any one of claims 1 to 11 is implemented.
